# EUROPEAN PATENT APPLICATION

(11) **EP 4 718 260 A1**
(43) Date of publication of application: **01.04.2026**
(21) Application number: 25192716.6
(22) Date of filing: 30.07.2025
(51) Int. Cl.: G06F 11/14, G06F 16/14, G06F 16/907

(54) **UNIFIED METADATA CATALOG FOR DATA MANAGEMENT PLATFORMS**

(30) Priority: 30.09.2024 IN 202441073709; 30.04.2025 US 202519195236
(71) Applicant: Cohesity, Inc., Santa Clara, California 95054 (US)
(72) Inventor: AGARWAL, Akshat, Santa Clara, 95054 (US); BAJAJ, Rupesh, Santa Clara, 95054 (US); STATTON, Gregory, Santa Clara, 95054 (US)
(74) Representative: EIP

(57) **Abstract**

In general, various aspects of the techniques enable a computing system to implement a unified metadata catalog. The computing system may include a memory configured to store a unified metadata catalog processing means. The processing means may be configured to obtain metadata from data objects, and log the metadata to the unified metadata catalog. The unified metadata catalog may log the metadata as the metadata changes over time so that the unified metadata catalog maintains a time-based historical record of the metadata. The processing means may be further configured to expose the unified metadata catalog to one or more services that perform operations with respect to the unified metadata catalog.

## Description

### TECHNICAL FIELD

This disclosure relates to data management in computing systems.

### BACKGROUND

Data may be commonly queried to retrieve specific information or datasets (which may also be referred as a data object) from storage systems, enabling data analysis, data recovery, data mining, forensic analysis, and compliance with regulatory requirements.

A data object may be a file or any other form of structured data created and digitally stored. Data objects can include PDFs, spreadsheets, emails, text files, word processor files, HTML, XML, transcripts, videos, images, and presentations, for example. In some cases, text of the documents can be transcribed from media (e.g., speech transcription), encoded in the documents or visible in media (e.g., text displayed in a video, such as closed captioning), or otherwise represented in media.

### SUMMARY

Data objects accessible to a data management platform are often voluminous and can span a number of different server clusters, which may present challenges in terms of retrieving and aggregating metadata describing different aspects of the underlying data objects. This metadata may include a modification time of the data object, an indication that the data object contains personal identification information (PII), an owner (or, in other words, an author) of the data object, permissions for accessing the data object, access times, a user accessing the data object, etc.

In general, techniques for enabling a unified metadata catalog are described. For example, a data management platform that implements the described techniques may mine or otherwise obtain metadata from data objects spanning different server clusters and aggregate the metadata over time in a unified format, which allows for more granular analysis of the metadata as the metadata changes over time. The data platform may also correlate metadata from data objects stored to different server clusters. The data platform may store this metadata to the unified metadata catalog while exposing an application programming interface (or any other type of interface) by which one or more services may access the metadata and perform operations with respect to the time-based metadata (including historical analysis that reviews the state of the metadata at different times, which allows for further review of the data objects and how these data objects are accessed at different times).

The techniques may provide one or more technical advantages that facilitate one or more practical applications. Existing data management platforms for interacting with data objects may have limited exposure to metadata stored to different server clusters locally. As such, the metadata in existing data management platforms may have a limited view since there is no unified metadata catalog or may construct a temporary metadata catalog using the locally stored metadata having no defined format for the metadata or any way to unify the metadata for access by the one or more services (and especially third party services that may be unaware that the metadata even exists).

By allowing for a unified metadata catalog that persists and provides a defined interface by which to expose the unified metadata catalog, the data platform may improve operation of the services, as the limited view of metadata may lead to inaccuracies that result in inefficient operation of the services (given that the inaccuracies result in further consumption of computing resources, such as processor cycles, memory, memory bus bandwidth, etc. and associated power, in order to retrieve additional metadata). Further, the user may better understand the types of metadata available for consumption by the services and expose the user to the metadata in a way that allows for better service application that may more efficiently perform the various operations to, as some examples, perform a security assessment, compliance assessment, planning review, etc. The unification of the metadata in the unified metadata catalog along with aggregation of metadata across different aspects of the server clusters may allow for more granular analysis of the metadata to potentially promote improved service applications (in terms of allowing for new types of, as an example, security threat detection previously unavailable when only metadata from a single source within a single service cluster was used rather than metadata from multiple sources across different server clusters). In this way, the unified metadata catalog may improve operation of the application systems and data platform themselves.

The techniques may thereby improve one or more of the technical fields of data processing, management, querying, data insight generation, and navigation.

In an example, a data management platform providing data protection for one or more application systems supporting one or more server clusters storing data objects, the data platform comprising: a memory configured to store a unified metadata catalog; and processing means configured to: obtain metadata from the data objects; log the metadata to the unified metadata catalog, the unified metadata catalog logging the metadata as the metadata changes over time so that the unified metadata catalog maintains a time-based historical record of the metadata; and expose the unified metadata catalog to one or more services that perform operations with respect to the unified metadata catalog.

In an example, a method of protection for one or more application systems supporting one or more server clusters storing data objects, the method comprising: obtaining metadata from the data objects; logging the metadata to a unified metadata catalog, the unified metadata catalog logging the metadata as the metadata changes over time so that the unified metadata catalog maintains a time-based historical record of the metadata; and exposing the unified metadata catalog to one or more services that perform operations with respect to the unified metadata catalog.

In an example, one or more computer-readable media comprising instructions that, when executed by processing means of a data platform configured to protect one or more application systems supporting one or more server clusters storing data objects, cause the processing means: obtain metadata from the data objects; log the metadata to a unified metadata catalog, the unified metadata catalog logging the metadata as the metadata changes over time so that the unified metadata catalog maintains a time-based historical record of the metadata; and expose the unified metadata catalog to one or more services that perform operations with respect to the unified metadata catalog.

The details of one or more examples of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a block diagram illustrating an example system for data management, in accordance with techniques of the present disclosure.
FIG. 2 is a block diagram illustrating an example of a computing system that implements a data management platform, in accordance with techniques of this disclosure.
FIG. 3 is a block diagram illustrating an example architecture that supports a unified metadata catalog in accordance with various aspects of the techniques described in this disclosure.
FIG. 4 is a flowchart illustrating example operation of a data management platform that provides a unified metadata catalog in accordance with various aspects of the techniques described in this disclosure.

Like reference characters denote like elements throughout the text and figures.

### DETAILED DESCRIPTION

Currently, no system or person has visibility into all aspects of metadata produced by various systems when processing data objects. Data objects accessible to a data management platform are often voluminous and can span a number of different server clusters, which may present challenges in terms of retrieving and aggregating metadata describing different aspects of the underlying data objects. This metadata may include a modification time of the data object, an indication that the data object contains personal identification information (PII), an owner (or, in other words, an author) of the data object, permissions for accessing the data object, access times, a user accessing the data object, etc.

As multiple clusters (which may be separated by data domain - e.g., finance data objects stored to a first data cluster separate from human resource data objects stored to a second different cluster - geographically, virtually, etc.) may include various agents or systems for interacting with the data objects to obtain the metadata, where such metadata may be obtained and stored locally to improve accessibility of the metadata (e.g., in terms of latency, processing cycles, etc.), reduce network bandwidth usage and costs associated with bandwidth usage to communicate with a central metadata repository, and the like. As a result, it is often difficult to aggregate the metadata or otherwise provide a comprehensive view of the metadata across server clusters that may differ in terms of functionality, capabilities (e.g., different server architectures, processing power, storage speeds, etc.), and location. This distributed metadata storage may reduce the ability to gain a comprehensive understanding of the data objects, leading to potential inaccuracies in identifying and maintaining the data objects (from a planning, compliance, security, etc. perspective).

Techniques are described for automatically mining and aggregating metadata concerning data objects in a unified metadata catalog that facilitates an overall review of the metadata in an extensible and defined format. While described herein as obtaining metadata from data objects undergoing a backup operation to a secondary (or, in other words, backup) storage systems, various aspects of the techniques may allow for obtaining metadata from data objects stored to a primary (or, in other words, production) storage system. In any event, the data platform may process data objects (e.g., using first party tools and/or third-party tools) to obtain the metadata. The data platform may execute the tools (which may also be referred to as agents) to process the data objects stored to each server cluster and communicate with the data platform backend to log the metadata to a unified metadata catalog that is exposed (via a defined metadata application programming interface - API) for further review and processing by one or more data platform systems (including on-prem systems and/or data platform backend systems) to facilitate a number of different services.

The agents may periodically or continuously process data objects that have changed over time, storing the changed metadata to the metadata catalog. In other words, the metadata catalog stores the metadata as the metadata changes over time, thereby enabling detailed, time-based analysis of the metadata to further facilitate review and processing of the metadata by the one or more data platform systems.

For example, a security system may invoke the metadata API to retrieve metadata that spans two or more clusters, processing the metadata to identify any security threats. To illustrate, a user A may modify a file that contains personal identification information (PII) at time t₁, where the agents may process the file to determine that the file was last modified by user A at time t₁. The metadata may also indicate that the owner B created the file at time t₀ and the user has permissions X at time t₁ (permissions such as superuser and/or normal user modes, which may refer to different modes for different levels of permissions that restrict access to the metadata for which the permissions of each different mode apply), that the file had permissions Y at time t₁. The security system may obtain from the data catalog the metadata for time t₀, which may indicate that the owner B created the file at time t₀ having permissions Z. The security service may compare the permissions Z to the permissions X and Y in order to see if there was a security breach involving an improper access by user A that was allowed due to the permissions for the file changing from permissions X from the original permissions Z (thereby restricting access to the user A with the permissions Z).

With traditional approaches, enterprises often struggle to gain insights across server clusters using metadata stored locally and obtained through processing of local data objects. The distributed nature of clusters may result in various nodes in the cluster having various processing capabilities (or other types of capabilities, such as data access speeds, memory storage space, etc.) that limit the processing of data objects in terms of mining metadata regarding data objects. In addition, there is no defined format that facilitate logging of metadata in a unified or uniform way that would allow for storage to a unified metadata catalog. In addition, in traditional approaches, only a single version of the metadata is tracked (e.g., the current version where older versions are overwritten), which does not permit time-based historical analysis of metadata and how that metadata changed over time. These limitations of traditional systems may lead in inaccuracies that may reduce the performance of security reviews, compliance reviews, troubleshooting, planning reviews (e.g., reviewing hot and cold spots within the server clusters that are overutilized and/or underutilized), etc.

The techniques described in this disclosure may allow for a defined and extensible format for defining metadata in a unified fashion while still allowing for additional types of metadata to be defined and added to the metadata catalog. The metadata catalog may expose a metadata application programming interface (API) by which the agents may log the time-based metadata as the metadata changes over time. The agents may invoke the metadata API to store the metadata over time, only providing updates to the metadata catalog when the metadata obtained from a given data object changes, thereby potentially avoiding having to reprocess all of the data objects in any given metadata mining process. Instead, the agents may only invoke the API to store the metadata that changes over time, processing only the data objects that have changed since the last metadata mining process was executed (or, in some instances, metadata is continually extracted in response to any changes to the corresponding data object).

The services may also invoke the API to retrieve and process the metadata stored to the metadata catalog, which may provide a full view of all metadata across multiple different (and possibly all) server clusters. This comprehensive view of the metadata provided by the metadata catalog may therefore enable the services to perform various operations (e.g., security threat review, compliance audits, expenditure analysis - e.g., in terms of network storage costs, network bandwidth costs, etc., and various other operations supported by the data platform. Given the comprehensive nature of the unified metadata catalog, the services may more accurately perform the various operations, which may expose enterprise-wide insights into the operation of the enterprise storage system, including the types of data objects stored and how those data objects have changed over time.

The additional insights provided based on the unified metadata catalog may thereby improve operation of the data platform and underlying application systems supported by the clusters in terms of reducing computing resources utilized (e.g., reducing processing cycles, memory storage space, memory bus bandwidth, etc. and associated power consumption) by way of reducing inaccuracies that result in mismanagement of the server clusters. Further, more accurate security threat detection (given the more granular and comprehensive nature of the metadata stored to the unified metadata catalog, including changes to metadata over time), compliance review, planning review, etc. may result in less troubleshooting while providing the users with a better understanding of how the enterprise or other organization is utilizing the server clusters to store data objects of various types.

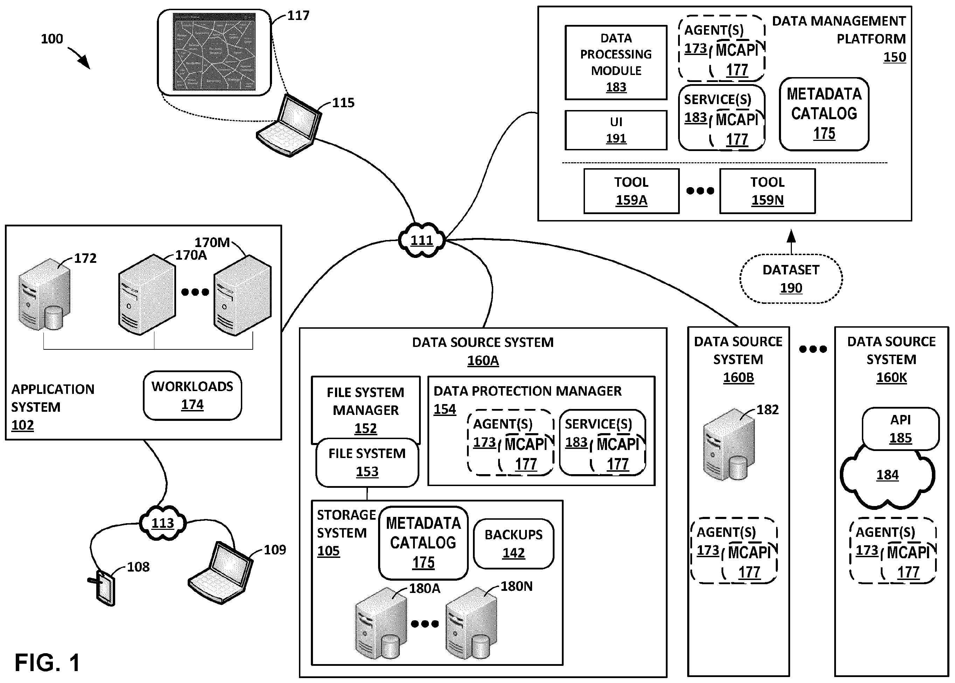

FIG. 1 is a block diagram illustrating an example system for data management, in accordance with one or more examples of the present disclosure. In the example of FIG. 1, system 100 includes application system 102. Application system 102 represents a collection of hardware devices, software components, and/or data stores that can be used to implement one or more applications or services provided to one or more mobile devices 108 and one or more client devices 109 via a network 113. Application system 102 may include one or more physical or virtual computing devices that execute workloads 174 for the applications or services. Workloads 174 may include one or more virtual machines, containers, Kubernetes pods each including one or more containers, bare metal processes, and/or other types of workloads. Application system 102 may be associated with an enterprise or other entity.

In the example of FIG. 1, application system 102 includes application servers 170A-170M (collectively, "application servers 170") connected via a network with database server 172 implementing a database. Other examples of application system 102 may include one or more load balancers, web servers, network devices such as switches or gateways, or other devices for implementing and delivering one or more applications or services to mobile devices 108 and client devices 109. Application system 102 may include one or more file servers. The one or more file servers may implement a primary file system for application system 102. (In such instances, file system 153 may be a secondary file system that provides backup, archive, and/or other services for the primary file system. Reference herein to a file system may include a primary file system or secondary file system, e.g., a primary file system for application system 102 or file system 153 operating as either a primary file system or a secondary file system.) Application system 102 may be located on premises and/or in one or more data centers, with each data center a part of a public, private, or hybrid cloud. The applications or services may be distributed applications. The applications or services may support enterprise software, financial software, office or other productivity software, data analysis software, end user relationship management, web services, educational software, database software, multimedia software, information technology, health care software, or other type of applications or services. The applications or services may be provided as a service (-aaS) for Software-aaS, Platform-aaS, Infrastructure-aaS, Data Storage-aas (dSaaS), or other type of service.

In some examples, application system 102 may represent an enterprise system that includes one or more workstations in the form of desktop computers, laptop computers, mobile devices, enterprise servers, network devices, and other hardware to support enterprise applications. Enterprise applications may include enterprise software, financial software, office or other productivity software, data analysis software, end user relationship management, web services, educational software, database software, multimedia software, information technology, health care software, or other type of applications. Enterprise applications may include applications that generate queries, which data management platform 150 may process based on backup data stored at a storage system 105 of data source 160A, using services available at data source systems 160A-160K (collectively, "data source systems 160"), or using other data stored and available from data source systems 160. Enterprise applications may be delivered as a service from external cloud service providers or other providers, executed natively on application system 102, or both.

In the example of FIG. 1, system 100 includes a data source system 160A that provides a file system 153 and backup functions to an application system 102 using storage system 105. In some cases, data source 160A may use a separate, secondary storage system (not shown) to store backup data. Data source system 160A implements a distributed file system 153 and a storage architecture to facilitate access by application system 102 to file system data and to facilitate the transfer of data between storage system 105 and application system 102 via network 111. With the distributed file system, data source system 160A enables devices of application system 102 to access file system data, via network 111 using a communication protocol, as if such file system data was stored locally (e.g., to a hard disk of a device of application system 102). Example communication protocols for accessing files and objects include Server Message Block (SMB), Network File System (NFS), or AMAZON Simple Storage Service (S3). File system 153 may be a primary file system or secondary file system for application system 102.

File system manager 152 represents a collection of hardware devices and software components that implements file system 153 for data source system 160A. Examples of file system functions provided by the file system manager 152 include storage space management including deduplication, file naming, directory management, metadata management, partitioning, and access control. File system manager 152 executes a communication protocol to facilitate access via network 111 by application system 102 to files and other objects stored to storage system 105.

Data source system 160A includes storage system 105 having one or more storage devices 180A-180N (collectively, "storage devices 180"). Storage devices 180 may represent one or more physical or virtual compute and/or storage devices that include or otherwise have access to storage media. Such storage media may include one or more of flash drives, solid state drives (SSDs), hard disk drives (HDDs), forms of electrically programmable memories (EPROM) or electrically erasable and programmable (EEPROM) memories, and/or other types of storage media used to support data source system 160A. Different storage devices of storage devices 180 may have a different mix of types of storage media. Each of storage devices 180 may include system memory. Each of storage devices 180 may be a storage server, a network-attached storage (NAS) device, or may represent disk storage for a compute device. Storage system 105 may include a redundant array of independent disks (RAID) system, Storage as a service (STaaS), Network Attached Storage (NAS), and/or a Storage Area Network (SAN).

In some examples, one or more of storage devices 180 are both compute and storage devices that execute software for data source system 160A, such as file system manager 152 and data protection manager 154 in the example of system 100, and store objects and metadata for data source system 160A to storage media. In some examples, separate compute devices (not shown) execute software for data source system 160A, such as file system manager 152 and data protection manager 154 in the example of system 100. Each of storage devices 180 may be considered and referred to as a "storage node" or simply as a "node". In some examples, storage devices 180 may represent virtual machines running on a supported hypervisor, a cloud virtual machine, a physical rack server, or a compute model installed in a converged platform.

In some examples, data source system 160A may run on physical systems, virtually, or natively in the cloud. For instance, data source system 160A may be deployed to a physical cluster, a virtual cluster, or a cloud-based cluster running in a private cloud, on-prem, hybrid cloud, or a public cloud deployed by a cloud service provider. In some examples of system 100, multiple instances of data source system 160A may be deployed, and file system 153 may be replicated among the various instances. In some cases, data source system 160A is a compute cluster that represents a single management domain. The number of storage devices 180 may be scaled to meet performance needs.

Data source system 160A may implement and offer multiple storage domains to one or more tenants or to segregate workloads 174 that require different data policies. A storage domain may be a data policy domain that determines policies for deduplication, compression, encryption, tiering, and other operations performed with respect to objects stored using the storage domain. In this way, data source system 160A may offer users the flexibility to choose global data policies or workload specific data policies. Data source system 160A may support partitioning.

A view may be a protocol export that resides within a storage domain. A view may inherit data policies from its storage domain, though additional data policies may be specified for the view. Views can be exported via SMB, NFS, S3, and/or another communication protocol. Policies that determine data processing and storage by data source system 160A may be assigned at the view level. A protection policy may specify a backup frequency and a retention policy.

Each of network 113 and network 111 may be the internet or may include or represent any public or private communications network or other network. For instance, each of network 113 and network 111 may be a cellular, Wi-Fi^{®}, ZigBee^{®}, Bluetooth^{®}, Near-Field Communication (NFC), satellite, enterprise, service provider, local area network, and/or other type of network enabling transfer of data between computing systems, servers, computing devices, and/or storage devices. One or more of such devices may transmit and receive data, commands, control signals, and/or other information across network 113 or network 111 using any suitable communication techniques. Each of network 113 or network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 113 and/or network 111 using one or more network links. The links coupling such devices or systems to network 113 and/or network 111 may be Ethernet, Asynchronous Transfer Mode (ATM) or other types of network connections, and such connections may be wireless and/or wired connections. One or more of the devices or systems illustrated in FIG. 1 or otherwise on network 113 and/or network 111 may be in a remote location relative to one or more other illustrated devices or systems.

Application system 102, using file system 153 provided by data source system 160A, may generate objects and other data (which may generally be referred to as "data objects") that file system manager 152 may create, manage, and cause to be stored to storage system 105. For this reason, application system 102 may alternatively be referred to as a "source system," and file system 153 for application system 102 may alternatively be referred to as a "source file system." Application system 102 may for some purposes communicate directly with storage system 105 via network 111 to transfer data objects, and for some purposes communicate with file system manager 152 via network 111 to obtain data objects or metadata indirectly from storage system 105. File system manager 152 generates and stores metadata to storage system 105. The collection of data stored to storage system 105 and used to implement file system 153 is referred to herein as file system data. File system data may include the aforementioned metadata and data objects. Metadata may include file system objects, tables, trees, or other data structures; metadata generated to support deduplication; or metadata to support snapshots. Objects that are stored may include files, virtual machines, databases, applications, pods, container, any of workloads 154, system images, directory information, or other types of objects used by application system 102. These may also be referred to as "backup objects." Objects of different types and objects of a same type may be deduplicated with respect to one another.

Data source system 160A includes data protection manager 154 that may provide data protection operations for source systems. This may include applying data protection to file system data for file system 153; workloads 174; or programs and/or data of any of application servers 170, database server 172, or other computing device of application system 102. In the example of system 100, data protection manager 154 backs up protected data to one or more backups 142 ("backups 142") stored by storage system 105. In some examples, a separate storage system (not shown) may store backups 142. The separate storage system may deployed and managed by a cloud storage provider and referred to as a "cloud storage system." In some examples, the separate storage system is co-located with storage system 105 in a data center, on-prem, or in a private, public, or hybrid cloud. The separate storage system may be considered a "backup" or "secondary" storage system for storage system 105 when storage system 105 is a primary storage system. The separate storage system may be referred to as an "external target" for backups 142). Any of data source systems 160B-160K may be the separate, secondary storage system for data source system 160A.

Because storage system 105 is often more difficult or expensive to scale, data source system 160A may use a secondary storage system to support secondary data protection use cases such as backup, archive, mirroring, disaster recovery, and/or replication. In general, a file system backup is a copy of file system 153 to support protecting file system 153 for quick recovery, often due to some data loss in file system 153, and a file system archive ("archive") is a copy of file system 153 to support longer term retention and review. The "copy" of file system 153 may include only such data as is needed to restore or view file system 153 in its state at the time of the backup or archive. While the techniques of this disclosure are described with respect to retrieving backup data stored to storage system 105 or a secondary storage system, the techniques may be applied with respect to any data objects stored in a primary storage system or as a form of backup data to any storage system. For example, backup data can include archive data, replicated data, mirrored data, or snapshots. The techniques of this disclosure apply to data stored in primary or secondary storage systems.

Data protection manager 154 may back up source system data at any time in accordance with backup policies that specify, for example, backup periodicity and timing (daily, weekly, etc.). For example, data protection manager 154 may back up file system data for file system 153 at any time in accordance with backup policies that specify, for example, backup periodicity and timing, which file system data is to be backed up, storage location, access control, and so forth. A backup of file system data may correspond to a state of the file system data at a backup time. Backups 142 may thus represent time series data for file system 153 in that each backup stores a representation of file system 153 at a particular time.

Because source system data changes over time due to creation of new data objects, modification of existing data objects, and deletion of data objects, backups 142 will differ. For example, a backup may include a full backup of the file system 153 data or may include less than a full backup of the file system 153 data, in accordance with backup policies. For example, a given backup of backups 142 may include all data objects of file system 153 or one or more selected data objects of file system 153. A given backup of backups 142 may be a full backup or an incremental backup.

Backups 142 may be used to generate views and snapshots. A current view generally corresponds to a (near) real-time backup state of the file system 153. A snapshot represents a backup state of the primary storage system 105 at a particular point in time. That is, each snapshot provides a state of data objects of file system 153, which can be restored to the primary storage system 105 if needed. Similarly, a snapshot can be exposed to a non-production workload, or a clone of a snapshot can be created should a non-production workload need to write to the snapshot without interfering with the original snapshot.

Thus, data protection manager 154 may use any of backups 142 to subsequently restore the file system (or portion thereof) to its state at the backup creation time, or the backup may be used to create or present a new file system (or "view") based on the backup, for instance. Data protection manager 154 may deduplicate file system data included in a subsequent backup against file system data that is included in one or more previous backup. For example, a second data object of file system 153 and included in a second backup may be deduplicated against a first data object of file system 153 and included in a first, earlier backup.

Backup manager 154 may apply deduplication as part of a write process of writing (i.e., storing) a data object of file system 153 to one of backups 142 in storage system 105. Additional description of an example deduplication process is found in U.S. Patent Application No. 18/183,659, filed 14 March 2023, and titled "Adaptive Deduplication of Data Chunks," which is incorporated by reference herein in its entirety. A user or application associated with application system 102 may have access (e.g., read or write), via data source system 160A or via data management platform 150, to backup data that is stored in a separate storage system.

Data source systems 160 may contain a wealth of information for an enterprise, but backups 142 have high access latencies, being stored to slower storage mediums. In addition, in a modern, distributed architecture, it can be complex to collect, collate, and leverage data objects (and associated metadata) from workflows across an organization's data estate. Data source systems 160 may operate in a myriad of locations, spanning private data centers, single or multiple clouds, SaaS applications hosted by other organizations, and edge locations like stores, Internet-of-Things (IoT) devices, and many other applications. Conventional data platforms may store petabytes (or more) of data without classifying, indexing, or tracking it. This is often referred to as "dark data," and it's typically unknown to the organization and is often unstructured and/or difficult to access. The main challenge with dark data is that it represents a missed opportunity for organizations to gain insights and make informed decisions, and secure and protect data.

As used herein, a "dataset" may refer to data objects stored by or obtained from any of source systems 160 ("source system data") (or other source of data objects). For example, dataset 190 includes data objects from one or more of data source systems 160. (Although shown in FIG. 1 as transmitted from systems 160 to data management platform 150 as a whole, dataset 190 is typically streamed or otherwise sent in portions for processing due to its typically large size.) Dataset 190 may include any data objects, including file system data, archive data, backup data (e.g., backups 142), backup snapshots of file system data, cloud storage data, etc. Dataset 190 may include documents.

Indexing is a process used information retrieval to efficiently store, search, and retrieve items like documents or images that have been represented as vectors (e.g., embeddings). When dealing with a large dataset of documents, vector indexing may allow for quick similarity searches, often based on cosine similarity or other distance measures between vectors. Vector indexing often operates on vectors that have been generated through a semantic embedding process. For example, data management platform 150 may generate embeddings for chunks using a model like BERT, which captures semantic meanings, and then a vector index is built to store those embeddings for fast retrieval. Semantic indexing focuses on the meaning and relationships between documents, chunks, or other data objects, and refers to indexing based on the semantic (i.e., meaning-based) similarity between documents, chunks, or other data objects. Semantic indexing may involve Latent Semantic Indexing (LSI) or using deep learning models (e.g., BERT, GPT) to capture the meaning of words, phrases, or entire documents in vector form. Semantic indexing facilitates retrieval of documents that are semantically related to a query, rather than just matching keywords. As used herein, "index" or "indexing" may refer to vector indexing, semantic indexing, or any combination thereof.

Data management platform 150 provides centralized data management for data associated with a user. The user can be an organization, tenant, human person, enterprise, or human agent thereof, for instance. User interface module 191 of data management platform 150 may generate user interfaces for output and display via user devices, such as user device 115 that access data management platform 150 via network 111. In the example of FIG. 1, user interface module 191 generates and outputs, for display at user device 115, user interface 117.

Data objects associated with a user and managed by data management platform 150 can be spread across multiple heterogenous data source systems 160. Data source systems 160 may make data objects accessible to data management platform 150 via network 111. In some examples, to access the data, data management platform 150 leverages tools 159A-159N (collectively, "tools 159"). Each of data source systems 160 may represent a different type of data source such that the different data source systems are heterogenous and accessed using different tools 159 and protocol and may provide data according to different data types and formats. For example, data source systems 160 can each provide the data objects in a different format, according to different access protocols or interfaces, are dynamic or static, and otherwise differ in their accessibility to data management platform 150 such that they are heterogenous.

Data source systems 160 can be dynamic or static. Dynamic data source systems are those that store, provide, or otherwise make accessible data objects that are rapidly changing. These can include machine generated data streams or real-time data feeds, for example. Example dynamic data sources may include application programming interface (API) endpoints or Software as a service (SaaS) application endpoints-such as are illustrated by API 185 for a cloud service 184, machine log data, message bus streams, a relational database-such as is illustrated by database system 182, key/value stores, pub/sub service systems, etc. Static data source systems are those that store, provide, or otherwise make accessible data that changes or updates at a slower rate. Example static source systems include backup sources such as data source system 160A, vectorized context repositories such as are described in U.S. Patent Application 18/618,695, archive systems, etc.

Tools 159 may be functions data management platform 150 invokes to access or manage data objects stored by or made accessible from data source systems 160. Tools 159 may be implemented as independent software applications, which may execute directly on data management platform 150, or which may execute on one or more external systems. One or more of tools 159 may be third-party applications specially developed to access corresponding ones of data source systems 160.

Each of tools 159 may implement a northbound interface that can be invoked by data management platform 150 for machine-to-machine communication. Each tool of tools 159 is capable of interacting with a corresponding one of data source systems 160 to execute requests received at the northbound interface of the tool. To interact with data source systems 160 to access or manage data or access metadata for the data objects, tools 159 may implement one or more communication protocols.

Although shown and described as leveraging tools 159 for obtaining source system data from any of data source system 160, data management platform 150 may obtain source system data in other way, i.e., without use of such tools 159. In addition, the techniques may be applied with respect to any live/primary data or secondary data.

Data management platform 150 may receive, e.g., from user device 115, an input indicative of a query. A query can include text, for instance. The query may be a request that data management platform 150 perform, on behalf of the user of user device 115, a task with respect to data associated with a user and stored by any one or more data source systems 160. Satisfying the task may require that data management platform 150 perform multiple actions on behalf of the user of user device 115. For example, a query may be a request to optimize backups 142, perform a security operation, configure one or more data source systems 160, migrate data from data source system 160A to data source system 160B, generate an analysis or operational insight for data objects stored at data source system 160A and data source system 160B, perform an administrative task, etc. The query can be a natural language query. (References herein to security-related tasks are to be understood as a form of data management.)

In some cases, requested tasks can be or include tasks typically available using a graphical user interface (GUI) or command-line interface (CLI) of data management platform 150 (interfaces not shown in FIG. 1). Data management platform 150 may implement APIs, according to an API specification, that can be accessed and invoked to perform data management tasks.

In some examples, data management platform 150 may perform a task based on the query by leveraging tools 159 to complete tasks involving one or more source systems 160 to satisfy the query. Performing a task may include generating and outputting a response to the user. AI agent 158 can perform multiple tasks for multiple different queries. In some examples, data management platform 150 ingests an API specification for APIs implemented by data management platform 150 to perform operations typically available to the user via an interface.

As noted above, no system or person has visibility into all aspects of metadata produced by various systems when processing data objects. Data objects accessible to data management platform 150 are often voluminous and can span a number of different server clusters, which may present challenges in terms of retrieving and aggregating metadata describing different aspects of the underlying data objects. This metadata may include a modification time of the data object, an indication that the data object contains personal identification information (PII), an owner (or, in other words, an author) of the data object, permissions for accessing the data object, access times, a user accessing the data object, etc.

As multiple clusters (which may be separated by data domain - e.g., finance data objects stored to a first data cluster separate from human resource data objects stored to a second different cluster, storage domain, geographically, virtually, etc.) may include various agents or systems for interacting with the data objects to obtain the metadata, where such metadata may be obtained and stored locally to improve accessibility of the metadata (e.g., in terms of latency, processing cycles, etc.), reduce network bandwidth usage and costs associated with bandwidth usage to communicate with a central metadata repository, and the like. As a result, it is often difficult to aggregate the metadata or otherwise provide a comprehensive view of the metadata across server clusters that may differ in terms of functionality, capabilities (e.g., different server architectures, processing power, storage speeds, etc.), and location. This distributed metadata storage may reduce the ability to gain a comprehensive understanding of the data objects, leading to potential inaccuracies in identifying and maintaining the data objects (from a planning, compliance, security, etc. perspective).

In accordance with various examples of the techniques described in this disclosure, data management platform 150 may automatically mine and aggregate metadata concerning data objects in a unified metadata catalog that facilitates an overall review of the metadata in an extensible and defined format. While described herein as obtaining metadata from data objects undergoing a backup operation to a secondary (or, in other words, backup) storage system (e.g., data source system 160A), various aspects of the techniques may allow for obtaining metadata from data objects stored to a primary (or, in other words, production) storage system (e.g., application system 102 and/or file system 153). In any event, data management platform 150 may process data objects (e.g., using first party tools and/or third party agents) to obtain the metadata. Data management platform 150 may execute agents 173 to process the data objects stored to each server cluster and communicate with data management platform 150 to log the metadata to a unified metadata catalog 175 that is exposed (via a defined metadata catalog application programming interface - MCAPI 185) for further review and processing by one or more data platform systems (including on-prem systems and/or data platform backend systems) to facilitate a number of different services 183.

Agents 173 may periodically or continuously process data objects that have changed over time, storing the changed metadata to metadata catalog 175. In other words, metadata catalog 175 stores the metadata as the metadata changes over time, thereby enabling detailed, time-based analysis of the metadata to further facilitate review and processing of the metadata by the one or more data management platform systems.

For example, a security service 183 may invoke MCAPI 177 to retrieve metadata that spans two or more clusters, processing the metadata to identify any security threats. To illustrate, a user A may modify a file that contains personal identification information (PII) at time t₁, where the agents may process the file to determine that the file was last modified by user A at time t₁. The metadata may also indicate that the owner B created the file at time t₀ and the user has permissions X at time t₁, that the file had permissions Y at time t₁. The security system may obtain from the data catalog the metadata for time t₀, which may indicate that the owner B created the file at time t₀ having permissions Z. The security service may compare the permissions Z to the permissions X and Y in order to see if there was a security breach involving an improper access by user A that was allowed due to the permissions for the file changing from permissions X from the original permissions Z.

With traditional approaches, enterprises often struggle to gain insights across server clusters using metadata stored locally and obtained through processing of local data objects. The distributed nature of clusters may result in various nodes in the cluster having various processing capabilities (or other types of capabilities, such as data access speeds, memory storage space, etc.) that limit the processing of data objects in terms of mining metadata regarding data objects. In addition, there is no defined format that facilitate logging of metadata in a unified or uniform way that would allow for storage to unified metadata catalog 175. In addition, in traditional approaches, only a single version of the metadata is tracked (e.g., the current version where older versions are overwritten), which does not permit time-based historical analysis of metadata and how that metadata changed over time. These limitations of traditional systems may lead to inaccuracies that may reduce the performance of security reviews, compliance reviews, troubleshooting, planning reviews (e.g., reviewing hot and cold spots within the server clusters that are overutilized and/or underutilized), etc.

The techniques described in this disclosure may allow for a defined and extensible format for defining metadata in a unified fashion while still allowing for additional types of metadata to be defined and added to metadata catalog 175. Metadata catalog 175 may expose a metadata catalog application programming interface (MCAPI) 177 by which the agents may log the time-based metadata as the metadata changes over time. Agents 173 may invoke MCAPI 177 to store the metadata over time, only providing updates to metadata catalog 175 when the metadata obtained from a given data object changes, thereby potentially avoiding having to reprocess all of the data objects in any given metadata mining process. Instead, agents 173 may only invoke MCAPI 177 to store the metadata that changes over time, processing only the data objects that have changed since the last metadata mining process was executed (or, in some instances, metadata is continually extracted in response to any changes to the corresponding data object).

Services 183 may also invoke MCAPI 177 to retrieve and process the metadata stored to metadata catalog 175, which may provide a full view of all metadata across multiple different (and possibly all) server clusters. This comprehensive view of the metadata provided by metadata catalog 175 may therefore enable services 183 to perform various operations (e.g., security threat review, compliance audits, expenditure analysis - e.g., in terms of network storage costs, network bandwidth costs, etc., and various other operations supported by data management platform 150 (including third-party integration in which third party services are employed to perform the operations). Given the comprehensive nature of unified metadata catalog 175, services 183 may more accurately perform the various operations, which may expose enterprise wide insights into the operation of the enterprise storage system, including the types of data objects stored and how those data objects have changed over time.

In operation, data management platform 150 may interface with one or more of agents 173 (which may be local to data source systems 160 or may reside within data management platform 150 itself, where the dashed lines indicate a possible location at which agents 173 may execute) to obtain metadata from the data objects. These agents 173 may, after mining the metadata from the data objects, invoke MCAPI 177 to log the metadata to unified metadata catalog 175. Data management platform 150 may interface with data protection manager 154 to expose (via, e.g., MCAPI 177) unified metadata catalog 175 to services 183 that perform various operations with respect to unified metadata catalog 175.

In one example, data management platform 150 may invoke agents 173 in response to a backup process being initiated, where data protection manager 154 may retrieve data objects from application system 102 and/or one or more of data sources systems 160. Again, although described with respect to a backup process, various aspects of the techniques may also be applied to data objects stored to the primary storage system (e.g., application system 102 and/or file system 153). In any event, data protection manager 154 may begin to receive data objects from the primary storage system for backup and invoke agents 173 to process the data objects in order to collect metadata for each received data object. Agents 173 may invoke metadata catalog application programming interface (MCAPI) 177 to then log the metadata to metadata catalog 175.

Agents 173 may, in some instances, aggregate and/or correlate the metadata between different entities from different ones of the one or more server clusters represented by application system 102 and/or data source systems 160 prior to logging the metadata. In addition, agents 173 may interface with other systems to obtain additional metadata (e.g., a number and time/date for access requests for each data object) which may augment the original metadata extracted by agents 173. In some instances, augmenting of metadata may occur offline or at a later point in time (e.g., after the backup is complete) given the extensible nature of metadata catalog 175 and the associated metadata schema. In other words, different data pipelines (in which various agents 175 are invoked) may update or otherwise add to (in other words, augment) the original metadata to provide further metadata that better resembles the state of the data objects stored in the primary and/or secondary storage systems.

The correlation of metadata between different data objects from different server clusters may be technically implemented using a graph-based metadata relationship model. This model may represent each metadata attribute as a node in a directed graph, with edges representing relationships between attributes. The correlation process may employ a three-phase approach: first, metadata attributes may be normalized into a common format using protocol buffers; second, a pattern-matching algorithm may identify potential correlations based on attribute name similarity, value ranges, and temporal proximity; third, a weighted scoring mechanism may quantify the correlation strength based on multiple factors including creation time proximity, ownership commonality, and content similarity metrics. This correlation mechanism may be implemented using a distributed processing framework that partitions the correlation workload across multiple nodes to enable efficient processing of large metadata volumes spanning different server clusters.

As an example of additional metadata used to augment the originally obtained metadata, agents 173 may perform byte level similarity and/or semantic similarity comparisons with respect to the data objects (or even more granularly, with respect to one or more chunks forming a single data object). Byte level similarity refers to a comparison of the data objects at a byte-level, exposing any changes to the actual bits used to represent the data object. Semantic similarity may involve the above described embeddings (e.g., vector embeddings) which may distinguish between semantically similar portions of the data object from semantically dissimilar portions of the data object. For both byte level similarity and semantic similarity, agents 173 may process similarity with respect to a similarity thresholds, generating an indication of whether the data object (or chunks therefrom) satisfies the similarity threshold. Agents 173 may process the data object to determine how much of the data object has changed (at a byte level or semantically) in terms of a similarity score (and relative to a previous version of the data object stored to a previous one of backups 142). Agents 173 may then log this similarity score as additional metadata to metadata catalog 175.

Once the metadata is logged to metadata catalog 175, data protection manager 154 may backup the data object and proceed in this manner until the backup process is complete, thereby cataloging the data object metadata to metadata catalog 175. While shown as being a single metadata catalog 175 stored to storage system 105, metadata catalog 175 may be distributed and stored locally at each of application systems 102 and/or data source systems 160, where such a distributed unified metadata catalog may provide the benefits of storing the metadata catalog locally, while still enabling a system wide view of the metadata stored throughout the system. In some examples, the distributed metadata catalog may be synched between the various metadata catalogs or may include references (e.g., a location within the system and address) to different portions of the metadata catalog.

Once the backup process is complete (and all changed data objects have been processed to obtain metadata, which is then logged to metadata catalog 175), data protection manager 154 may invoke one or more services 183 that interface with metadata catalog 175 via MCAPI 177 to retrieve various portions of the metadata stored to unified metadata catalog 175. Services 183 may execute without user input or responsive to user input. When executing responsive to user input, services 183 may generate a graphical or other type of user interface with which the user interacts to define metadata parameters that guide the request for metadata from metadata catalog 175. Services 183 may next process the metadata to perform various operations that may improve operations of system 100 itself.

The additional insights provided based on unified metadata catalog 175 may thereby improve operation of data management platform 150 and underlying application system 102 supported by the clusters in terms of reducing computing resources utilized (e.g., reducing processing cycles, memory storage space, memory bus bandwidth, etc. and associated power consumption) by way of reducing inaccuracies that result in mismanagement of the server clusters. Further, more accurate security threat detection (given the more granular and comprehensive nature of the metadata stored to unified metadata catalog 175, including changes to metadata over time), compliance review, planning review, etc. may result in less troubleshooting while providing the users with a better understanding of how the enterprise or other organization is utilizing the server clusters to store data objects of various types.

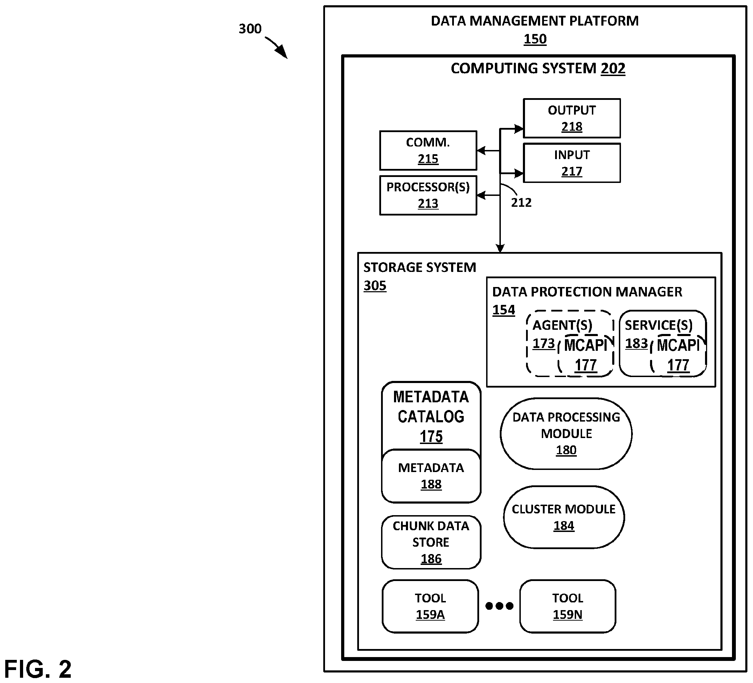

FIG. 2 is a block diagram illustrating an example of a computing system that implements data management platform 150, in accordance with techniques of this disclosure. Computing system 202 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, computing system 202 may represent a cloud computing system, server farm, and/or server cluster (or portion thereof) that provides services to other devices or systems. In other examples, computing system 202 may represent or be implemented through one or more virtualized compute instances (e.g., virtual machines, containers) of a cloud computing system, server farm, data center, and/or server cluster.

In the example of FIG. 2, computing system 202 may include one or more communication units 215, one or more input devices 217, one or more output devices 218, and one or more storage devices of storage system 305. Storage system 305 includes AI agent 158 and in this example includes tools 159, each of which are software modules in this example. However, any one or more of tools 159 may execute on different systems. Storage system 305 also includes control plane 220, data processing module 183, and cluster module 187. Storage system 305 is configured to store data and metadata for chunk data store 186 and cluster metadata 188. One or more of the devices, modules, storage areas, or other components of computing system 202 may be interconnected to enable inter-component communications (physically, communicatively, and/or operatively). In some examples, such connectivity may be provided by through communication channels (e.g., communication channels 212), which may represent one or more of a system bus, a network connection, an inter-process communication data structure, or any other method for communicating data.

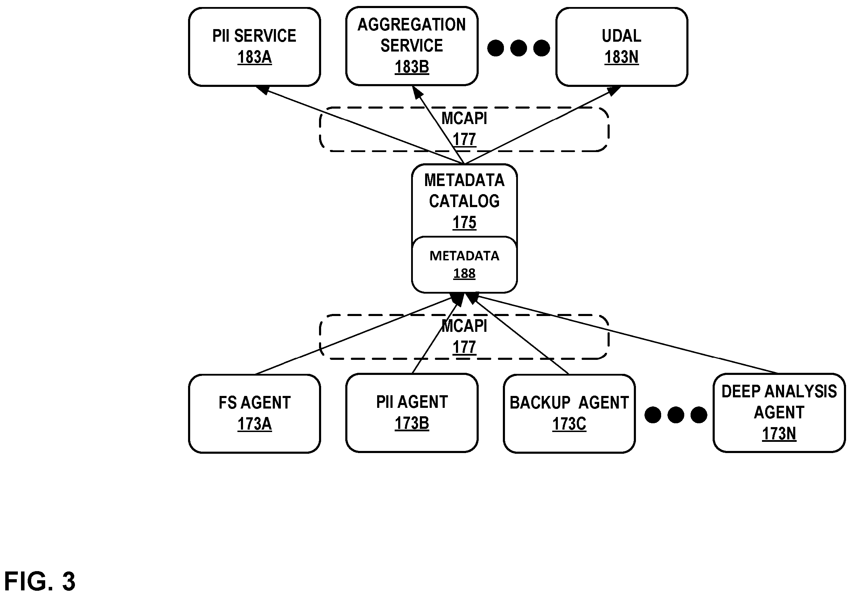

The computing system 302 comprises processing means. In the example of FIG. 3, the processing means comprises one or more processors 213 configured to implement functionality and/or execute instructions associated with computing system 202 or associated with one or more modules illustrated herein and/or described below, including tools 159, control plane 220, data processing module 183, and cluster module 187. One or more processors 213 may be, may be part of, and/or may include processing circuitry that performs operations in accordance with one or more examples of the present disclosure. Examples of processors 213 include microprocessors, application processors, display controllers, auxiliary processors, one or more sensor hubs, and any other hardware configured to function as a processor, a processing unit, or a processing device. Computing system 202 may use one or more processors 213 to perform operations in accordance with one or more examples of the present disclosure using software, hardware, firmware, or a mixture of hardware, software, and firmware residing in and/or executing at computing system 202.

One or more communication units 215 of computing system 202 may communicate with devices external to computing system 202 by transmitting and/or receiving data, and may operate, in some respects, as both an input device and an output device. In some examples, communication units 215 may communicate with other devices over a network. In other examples, communication units 215 may send and/or receive radio signals on a radio network such as a cellular radio network. In other examples, communication units 215 of computing system 202 may transmit and/or receive satellite signals on a satellite network. Examples of communication units 215 include a network interface card (e.g., such as an Ethernet card), an optical transceiver, a radio frequency transceiver, a GPS receiver, or any other type of device that can send and/or receive information. Other examples of communication units 215 may include devices capable of communicating over Bluetooth^{®}, GPS, NFC, ZigBee^{®}, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth^{®}, NFC, or other technologies or protocols.

One or more input devices 217 may represent any input devices of computing system 202 not otherwise separately described herein. Input devices 217 may generate, receive, and/or process input. For example, one or more input devices 217 may generate or receive input from a network, a user input device, or any other type of device for detecting input from a human or machine.

One or more output devices 218 may represent any output devices of computing system 202 not otherwise separately described herein. Output devices 218 may generate, present, and/or process output. For example, one or more output devices 218 may generate, present, and/or process output in any form. Output devices 218 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

One or more storage devices of storage system 305 within computing system 202 may store information for processing during operation of computing system 202. Storage devices may store program instructions and/or data associated with one or more of the modules described in accordance with one or more examples of this disclosure. One or more processors 213 and one or more storage devices may provide an operating environment or platform for such modules, which may be implemented as software, but may in some examples include any combination of hardware, firmware, and software. One or more processors 213 may execute instructions and one or more storage devices of storage system 305 may store instructions and/or data of one or more modules. The combination of processors 213 and storage system 305 may retrieve, store, and/or execute the instructions and/or data of one or more applications, modules, or software. Processors 213 and/or storage devices of storage system 305 may also be operably coupled to one or more other software and/or hardware components, including, but not limited to, one or more of the components of computing system 202 and/or one or more devices or systems illustrated as being connected to computing system 202.

As described above, one or more processors 213 may execute data protection manager 154, which may automatically mine and aggregate metadata concerning data objects in a unified metadata catalog that facilitates an overall review of the metadata in an extensible and defined format. While described herein as obtaining metadata from data objects undergoing a backup operation to a secondary (or, in other words, backup) storage system (e.g., data source system 160A), various aspects of the techniques may allow for obtaining metadata from data objects stored to a primary (or, in other words, production) storage system (e.g., application system 102 and/or file system 153). In any event, data protection manager 154 may invoke agents 173 to process data objects (e.g., using first party tools and/or third party agents) to obtain metadata 188. Data protection manager 154 may execute agents 173 to process the data objects stored to each server cluster to log metadata 188 to a unified metadata catalog 175 that is exposed (via a defined metadata catalog application programming interface - MCAPI 185) for further review and processing by one or more data platform systems (including on-prem systems and/or data platform backend systems) to facilitate a number of different services 183.

Agents 173 may periodically or continuously process data objects that have changed over time, storing changed metadata 188 to metadata catalog 175. In other words, metadata catalog 175 stores metadata 188 as metadata 188 changes over time, thereby enabling detailed, time-based analysis of metadata 188 to further facilitate review and processing of metadata 188 by the one or more data management platform systems applying services 183.

For example, a security service 183 may invoke MCAPI 177 to retrieve metadata 188 that spans two or more clusters, processing metadata 188 to identify any security threats. To illustrate, a user A may modify a file that contains personal identification information (PII) at time t₁, where the agents may process the file to determine that the file was last modified by user A at time t₁. The metadata may also indicate that the owner B created the file at time t₀ and the user has permissions X at time t₁, that the file had permissions Y at time t₁. The security system may obtain from the data catalog the metadata for time t₀, which may indicate that the owner B created the file at time t₀ having permissions Z. The security service may compare the permissions Z to the permissions X and Y in order to see if there was a security breach involving an improper access by user A that was allowed due to the permissions for the file changing from permissions X from the original permissions Z.

With traditional approaches, enterprises often struggle to gain insights across server clusters using the metadata stored locally and obtained through processing of local data objects. The distributed nature of clusters may result in various nodes in the cluster having various processing capabilities (or other types of capabilities, such as data access speeds, memory storage space, etc.) that limit the processing of data objects in terms of mining metadata regarding data objects. In addition, there is no defined format that facilitate logging of metadata in a unified or uniform way that would allow for storage to unified metadata catalog 175. In addition, in traditional approaches, only a single version of the metadata is tracked (e.g., the current version where older versions are overwritten), which does not permit time-based historical analysis of metadata and how that metadata changed over time. These limitations of traditional systems may lead to inaccuracies that may reduce the performance of security reviews, compliance reviews, troubleshooting, planning reviews (e.g., reviewing hot and cold spots within the server clusters that are overutilized and/or underutilized), etc.

The techniques described in this disclosure may allow for a defined and extensible format for defining metadata 188 in a unified fashion while still allowing for additional types of metadata 188 to be defined and added to metadata catalog 175. Metadata catalog 175 may expose a metadata catalog application programming interface (MCAPI) 177 by which agents 173 may log the time-based metadata 188 as metadata 188 changes over time. Agents 173 may invoke MCAPI 177 to store the metadata over time, only providing updates to metadata catalog 175 when metadata 188 obtained from a given data object changes, thereby potentially avoiding having to reprocess all of the data objects in any given metadata mining process. Instead, agents 173 may only invoke MCAPI 177 to store metadata 188 that changes over time, processing only the data objects that have changed since the last metadata mining process was executed (or, in some instances, metadata 188 is continually extracted in response to any changes to the corresponding data object).

The extensible metadata schema may be technically implemented using a layered schema architecture with a core schema definition and extension mechanisms. The core schema may be defined using JSON Schema (RFC 8259) with a hierarchical structure of required and optional fields for common metadata attributes. Extension mechanisms may include schema inheritance, where specialized metadata types inherit from base types; schema composition, where multiple schema fragments are combined; and schema versioning with backward compatibility mappings. New metadata types may be integrated through a schema registration process that validates the extended schema against structural constraints and indexing requirements. The schema processor may perform runtime validation using a two-phase commit protocol to ensure schema integrity across distributed nodes. For performance optimization, the system may implement a schema compilation process that transforms the declarative schema into executable validation code, and employs a lazy validation strategy that defers full schema validation until write operations while performing minimal validation during read operations.

Services 183 may also invoke MCAPI 177 to retrieve and process the metadata stored to metadata catalog 175, which may provide a full view of all metadata across multiple different (and possibly all) server clusters. In some instances, services 183 may invoke MCAPI 177 to request a subscription to metadata 188 stored to unified metadata catalog 175. Services 183 may represent a third party service that issues the request for the subscription where the request defines parameters for delivery of metadata 188 from metadata catalog 175 to the third party service. In this instance, data protection manager 154 may accept the subscription to the unified metadata catalog 175 and (automatically) output metadata 188 from unified metadata catalog 175 based on the parameters for the delivery of metadata 188 to the third party service.

The subscription mechanism to the unified metadata catalog may be technically implemented using an event-driven architecture with a publish-subscribe message broker. When a third-party service requests a subscription, the system may create a dedicated message queue for that service and registers metadata filter predicates as defined by the subscription parameters. These parameters may be encoded in a structured JSON format that specifies metadata types of interest, update frequency thresholds, delivery protocols, and filtering criteria. The parameter processing engine may translate these specifications into optimized database queries with appropriate indexing strategies. When metadata changes match the subscription criteria, the delivery mechanism may employ a batched transmission protocol that aggregates related changes to minimize network overhead, with configurable consistency guarantees ranging from eventual to strong consistency. The delivery may employ adaptive compression based on metadata type and network conditions, with automatic retry mechanisms implementing an exponential backoff algorithm for delivery failure scenarios.

This comprehensive view of the metadata provided by metadata catalog 175 may therefore enable services 183 to perform various operations (e.g., security threat review, compliance audits, expenditure analysis - e.g., in terms of network storage costs, network bandwidth costs, etc., and various other operations supported by data management platform 150 (including third-party integration in which third party services are employed to perform the operations). Given the comprehensive nature of unified metadata catalog 175, services 183 may more accurately perform the various operations, which may expose enterprise wide insights into the operation of the enterprise storage system, including the types of data objects stored and how those data objects have changed over time.

In operation, data protection manager 154 may interface with one or more of agents 173 (which may be local to data source systems 160 or may reside within data management platform 150 itself, where the dashed lines indicate a possible location at which agents 173 may execute) to obtain metadata 188 from the data objects. These agents 173 may, after mining metadata 188 from the data objects (e.g., stored and represented by chunk data store 186), invoke MCAPI 177 to log metadata 188 to unified metadata catalog 175. Data management platform 150 may interface with data protection manager 154 to expose (via, e.g., MCAPI 177) unified metadata catalog 175 to services 183 that perform various operations with respect to unified metadata catalog 175.

In one example, data protection manager 154 may invoke agents 173 in response to a backup process being initiated, where data protection manager 154 may retrieve data objects from application system 102 and/or one or more of data sources systems 160. Again, although described with respect to a backup process, various aspects of the techniques may also be applied to data objects stored to the primary storage system (e.g., application system 102 and/or file system 153). In any event, data protection manager 154 may begin to receive data objects from the primary storage system for backup and invoke agents 173 to process the data objects in order to collect metadata 188 for each received data object. Agents 173 may invoke MCAPI 177 to then log the metadata to metadata catalog 175.

Agents 173 may, in some instances, aggregate and/or correlate metadata 188 between different entities from different ones of the one or more server clusters represented by application system 102 and/or data source systems 160 prior to logging metadata 188. In addition, agents 173 may interface with other systems to obtain additional metadata 188 (e.g., a number and time/date for access requests for each data object) which may augment original metadata 188 extracted by agents 173. In some instances, augmenting of metadata 188 may occur offline or at a later point in time (e.g., after the backup is complete) given the extensible nature of metadata catalog 175 and the associated metadata schema. In other words, different data pipelines (in which various agents 175 are invoked) may update or otherwise add to (in other words, augment) original metadata 188 to provide further metadata 188 that better resembles the state of the data objects stored in the primary and/or secondary storage systems.

As an example of additional metadata 188 used to augment the originally obtained metadata, agents 173 may perform byte level similarity and/or semantic similarity comparisons with respect to the data objects (or even more granularly, with respect to one or more chunks forming a single data object). Byte level similarity refers to a comparison of the data objects at a byte-level, exposing any changes to the actual bits used to represent the data object. Semantic similarity may involve the above described embeddings (e.g., vector embeddings) which may distinguish between semantically similar portions of the data object from semantically dissimilar portions of the data object. For both byte level similarity and semantic similarity, agents 173 may process similarity with respect to a similarity thresholds, generating an indication of whether the data object (or chunks therefrom) satisfies the similarity threshold. Agents 173 may process the data object to determine how much of the data object has changed (at a byte level or semantically) in terms of a similarity score (and relative to a previous version of the data object stored to a previous one of backups 142). Agents 173 may then log this similarity score as additional metadata to metadata catalog 175.

The technical implementation of similarity processing may employ distinct algorithms for byte-level and semantic comparison. For byte-level comparison, the system may implement a rolling hash algorithm that generates checksums for data object chunks of configurable size (typically 4KB to 64KB), creating a fingerprint array that represents the data object's structure. These fingerprints may be compared using a locality-sensitive hashing technique that identifies similar regions while being resilient to insertions and deletions. The byte-level similarity threshold may be technically implemented as a Jaccard similarity coefficient calculated over the fingerprint sets. For semantic comparison, the system may employ a two-stage process: first, textual content may be extracted and tokenized using language-specific tokenizers; second, these tokens may be transformed into vector embeddings using a pre-trained transformer neural network model. Semantic similarity may then be computed using cosine distance between the normalized vector representations, with configurable thresholds defined as distance metrics in the embedding space. The similarity score may be calculated as a weighted combination of byte-level and semantic similarity, with weights dynamically adjusted based on content type. This score may be efficiently stored in the metadata catalog using a compact binary representation that preserves precision while minimizing storage requirements.

Once metadata 188 is logged to metadata catalog 175, data protection manager 154 may backup the data object and proceed in this manner until the backup process is complete, thereby cataloging the data object metadata to metadata catalog 175. While shown as being a single metadata catalog 175 stored to storage system 105, metadata catalog 175 may be distributed and stored locally at each of application systems 102 and/or data source systems 160, where such a distributed unified metadata catalog 175 may provide the benefits of storing metadata catalog 175 locally, while still enabling a system wide view of metadata 188 stored throughout the system. In some examples, distributed metadata catalog 175 may be synched between the various metadata catalogs or may include references (e.g., a location within the system and address) to different portions of metadata catalog 175.

Once the backup process is complete (and all changed data objects have been processed to obtain metadata 188, which is then logged to metadata catalog 175), data protection manager 154 may invoke one or more services 183 that interface with metadata catalog 175 via MCAPI 177 to retrieve various portions of metadata 188 stored to unified metadata catalog 175. Services 183 may execute without user input and/or responsive to user input. When executing responsive to user input, services 183 may generate a graphical or other type of user interface with which the user interacts to define metadata parameters that guide the request for metadata 188 from metadata catalog 175. Services 183 may next process the metadata to perform various operations that may improve operations of system 100 itself.

The additional insights provided based on unified metadata catalog 175 may thereby improve operation of data management platform 150 and underlying application system 102 supported by the clusters in terms of reducing computing resources utilized (e.g., reducing processing cycles, memory storage space, memory bus bandwidth, etc. and associated power consumption) by way of reducing inaccuracies that result in mismanagement of the server clusters. Further, more accurate security threat detection (given the more granular and comprehensive nature of the metadata stored to unified metadata catalog 175, including changes to metadata over time), compliance review, planning review, etc. may result in less troubleshooting while providing the users with a better understanding of how the enterprise or other organization is utilizing the server clusters to store data objects of various types.

In other words, a backup system (e.g., such as data management platform 150) may capture a wealth of data over time with each snapshot but such information is not easily accessible by the end users. For example, data management platform 150 may obtain the following:
1) Metadata (e.g., modification time, contains PII, owner, permissions, access information, etc.) about individual entities/data objects (e.g., documents, email, videos, webpages, audio, etc.);
2) Aggregation of this entity metadata over time, e.g., who accessed the file in the last week;
3) Correlating between different entities/data objects from different data sources (e.g., active directory and network attached storage - such as an engineer accessed a financial file over the last week);
4) Aggregation of entities by backup objects, e.g., how many PDFs (and their total sizes) modified over last month to get an insight into hot/cold data;
5) Analyzing audio logs of primary/secondary storage systems;
6) Finding entities across objects/backups matching given metadata (e.g., ransomware hash); and
7) File copes across multiple clusters and vaults over time.

Document protection manager 154 may invoke agents 173 to scan each document or other data object (which may also be referred to as entities) to extract metadata to store in unified metadata catalog 175. The extraction can also be done by third party services (or, in other words, third party plugins, such as PII classification) to augment metadata 188 and add new attributes. In addition to backing up the data, data protection manager 154 may execute plugins 183 to fetch additional metadata (e.g., file access) from other systems during the backup, where these plugins 183 may also be executed post backup to enhance metadata catalog 175. This information can be fetched incrementally (e.g., only process those documents which changed between 2 backups). As noted above, unified metadata catalog 175 may be build without taking a backup (e.g., scan the primary sources and construct metadata catalog 175 without storing the data objects.

FIG. 3 is a block diagram illustrating an example architecture that supports a unified metadata catalog in accordance with various aspects of the techniques described in this disclosure. As shown in the example of FIG. 3, agents 173 may include a file system (FS) agent 173A, a personal identification information (PII) agent 173B, a backup agent 173C, and a deep analysis agent 173N, each of which represent examples of agents 173.

FS agent 173A may obtain file system metadata 188 from one or more data objects that identifies the data object, file type, size, permissions, modification timestamp (which may also be referred to as "mtime"), and the like. PII agent 173B may scan the one or more data objects to determine whether the data objects include PII. PII agent 173B may output metadata 188 from the one or more data objects that indicates whether the one or more data objects include PII. Backup agent 173C may obtain metadata 188 from backups that provide statistics on backup processes, which may be aggregated to provide metadata 188 on one or more backups of the data objects. Deep analysis agent 173N may represent a deep analysis (e.g., using artificial intelligence and/or machine learning) to parse semantic similarity information and/or byte level similarity. Deep analysis agent 173N may implement any form of artificial intelligence and/or machine learning in the form of a deep learning model that has been trained on training data to identify deeper forms of metadata, such as semantic similarity using the embeddings discussed above in more detail.

Each of agents 173 may invoke one or more functions of MCAPI 177 to store metadata 188 to unified metadata catalog 175. Metadata catalog 175 may output metadata 188 via MCAPI 177 to one or more services 183. In the example of FIG. 3, example services 183 may include PII service 183A, aggregation service 183B, and/or universal data access layer (UDAL) 183N. PII service 183A may process PII metadata 188 to ensure compliance with PII regulations. Aggregation service 183B may aggregate various aspects of metadata 188 for presentation via dashboards and/or other graphical user interfaces. UDAL 183N may represent a service that provides a query engine that processes the uniformly formatted metadata 188 in support of security forensics, anomaly detection over time series (e.g., size changes, backup change rate, permissions, etc.), creating ML datasets, data governance, ad hoc batch processing on data, etc.

The technical integration between services and the metadata catalog may be implemented through a multi-layered API architecture. Each service, whether security, compliance, troubleshooting, or planning, may connect to the universal data access layer through a service-specific adapter that translates domain-specific operations into standardized metadata queries. The universal data access layer may be implemented as a middleware component with three technical sub-layers: a query processing engine that parses, optimizes, and executes metadata queries using a cost-based optimizer; a caching subsystem that implements a least-recently-used (LRU) eviction policy with time-to-live (TTL) constraints for temporal consistency; and a federation layer that routes queries to appropriate metadata partitions based on cluster affinity. The query engine may implement a specialized query language with operators optimized for metadata traversal, temporal analysis, and relationship navigation. Performance optimizations may include predicate pushdown, where filtering conditions may be applied at the earliest possible stage; columnar in-memory representation of frequently accessed metadata; and asynchronous prefetching based on predicted query patterns derived from historical access patterns.

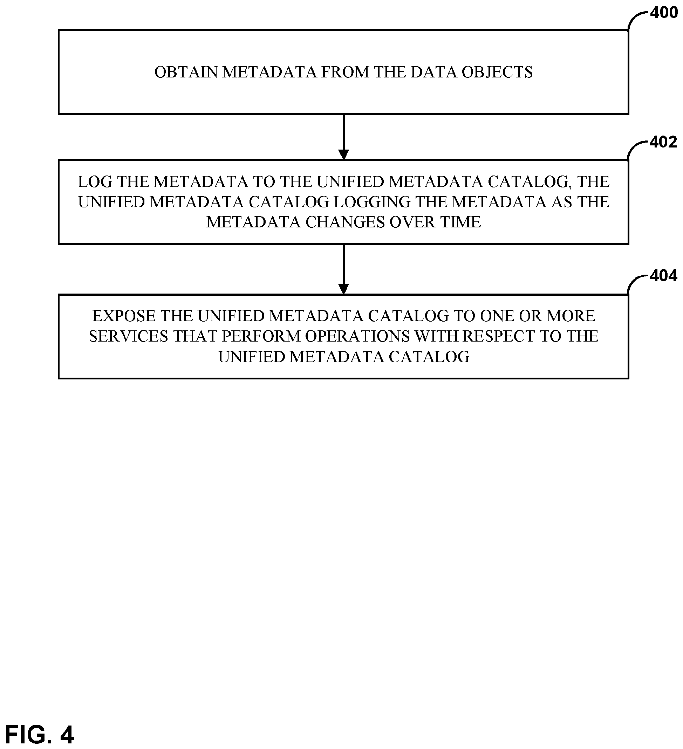

FIG. 4 is a flowchart illustrating example operation of a data management platform that provides a unified metadata catalog in accordance with various aspects of the techniques described in this disclosure. As described above, data management platform 150 may interface with one or more of agents 173 (which may be local to data source systems 160 or may reside within data management platform 150 itself, where the dashed lines indicate a possible location at which agents 173 may execute) to obtain metadata 188 from the data objects (400). These agents 173 may, after mining the metadata from the data objects, invoke MCAPI 177 to log the metadata to unified metadata catalog 175, where unified metadata catalog 175 may log metadata 188 as metadata 188 changes over time (402). Data management platform 150 may interface with data protection manager 154 to expose (via, e.g., MCAPI 177) unified metadata catalog 175 to services 183 that perform various operations with respect to unified metadata catalog 175 (404).

Storage of the unified metadata catalog 175 provides the technical effect of centralizing previously fragmented metadata into a single accessible repository, which eliminates the need for redundant storage across multiple clusters. This centralization directly allows a reduction in storage requirements across the distributed system as metadata is stored once rather than being duplicated across multiple cluster-specific repositories.

Obtaining metadata from data objects implements technical improvements by utilizing an optimized metadata extraction process that operates at the file system level rather than the application level. This approach reduces CPU utilization during metadata extraction compared to conventional application-level metadata processing, as it avoids the overhead of loading entire data objects into application memory. The extraction process also implements parallel processing techniques that further reduce extraction time.

Logging the metadata to the unified metadata catalog as the metadata changes over time provides the technical effect of enabling efficient incremental updates rather than complete metadata reprocessing. This approach reduces network bandwidth consumption compared to traditional approaches that require complete metadata re-extraction, as only changed metadata is transmitted across the network. The time-based logging may also implement a technical storage optimization by enabling storage of only the differences between metadata states, reducing the storage footprint of historical metadata compared to storing complete metadata snapshots.

Exposing the unified metadata catalog to one or more services delivers the technical effect of standardized, efficient access to metadata across heterogeneous systems. This standardization reduces integration complexity by eliminating the need for services to implement custom connectors for each metadata source.

The unified approach reduces system-wide computational resource utilization for metadata-intensive operations, enables new technical capabilities for cross-cluster metadata analysis that were previously technically infeasible due to fragmentation, and improves system reliability by eliminating inconsistencies between disparate metadata repositories. This directly translates to reduced power consumption, improved system performance, and enhanced security threat detection capabilities through technical means.

In this way, various aspects of the techniques may enable the following examples.
Example 1. A computing system having access to one or more server clusters storing data objects, the system comprising: a memory configured to store a unified metadata catalog; and processing circuitry configured to: obtain metadata from the data objects; log the metadata to the unified metadata catalog, the unified metadata catalog logging the metadata as the metadata changes over time; and expose the unified metadata catalog to one or more services that perform operations with respect to the unified metadata catalog.
Example 2. The computing system of example 1, wherein the processing circuitry is configured to obtain the metadata from the data objects while stored in the one or more server clusters.
Example 3. The computing system of example 1, wherein the processing circuitry is configured to obtain the metadata during a backup performed by the data platform with respect to the data objects.
Example 4. The computing system of any of examples 1-3, wherein the one or more server clusters comprises a plurality of server clusters that each store a portion of the data objects.
Example 5. The computing system of any of examples 1-4, wherein the processing circuitry is configured to correlate the metadata between different ones of the data objects from different ones of the one or more server clusters.
Example 6. The computing system of any of examples 1-5, wherein the processing circuitry is further configured to: accept a subscription to the unified metadata catalog by a third-party service included in the one or more services, the subscription defining parameters for delivery of the metadata to the third-party service; and output the metadata from the unified metadata catalog based on the parameters for the delivery of the metadata to the third-party service.
Example 7. The computing system of any of examples 1-6, wherein the metadata includes one or more of a modification time by a user, whether a corresponding one of the data objects contains personal identification information, an indication of an owner of the data object, permissions assigned to the owner, permissions assigned to the corresponding one of the data objects, access times by a user, permissions assigned to the user that accessed the corresponding one of the data objects, and a size of the corresponding one of the data objects.
Example 8. The computing system of any of examples 1-7, wherein the processing circuitry is configured to obtain the metadata according to an extensible metadata schema.
Example 9. The computing system of any of examples 1-8, wherein the one or more data objects include multiple copies of the same data object, and wherein the metadata indicates where each copy of the multiple copies of the same data object are stored within the data management platform.
Example 10. The computing system of any of examples 1-9, wherein the services include one or more of: a security service that processes the metadata stored to the unified metadata catalog to detect security vulnerabilities; a compliance service that processes the metadata stored to the unified metadata catalog to detect compliance of data objects with various regulations; a troubleshooting service that processes the metadata stored to the unified metadata catalog to detect misconfiguration of the one or more server clusters; and a planning service that processes the metadata stored to the unified metadata catalog to determine resource planning for one or more of reconfiguring, expanding, and contracting the one or more server clusters.
Example 11. The computing system of any of examples 1-10, wherein the one or more services include a universal data access layer that provides a defined interface accessible by components of the data platform by which the components access the metadata stored to the unified metadata catalog.
Example 12. The computing system of any of examples 1-11, wherein the processing circuitry is configured to obtain the metadata from the data objects comprising incrementally obtaining the metadata only from the data objects that have changed since a previous time the metadata for the data objects that have changed was obtained.
Example 13. The computing system of any of examples 1-12, wherein the processing circuitry is configured to expose the unified metadata catalog via an application programming interface.
Example 14. The computing system of any of examples 1-13, wherein the processing circuitry is configured to: process the data objects to identify one or more portions of the data objects that satisfy a similarity threshold and obtain a similarity score; and log the similarity score as additional metadata to the unified metadata catalog.
Example 15. The computing system of example 14, wherein the processing circuitry is configured to perform a byte-level comparison of the data objects to determine whether the data objects satisfy the similarity threshold.
Example 16. The computing system of example 14, wherein the processing circuitry is configured to perform a semantic comparison of the data objects to determine whether the data objects satisfy the similarity threshold.
Example 17. A method comprising: obtaining metadata from data objects stored by one or more server clusters; logging the metadata to the unified metadata catalog, the unified metadata catalog logging the metadata as the metadata changes over time; and exposing the unified metadata catalog to one or more services that perform operations with respect to the unified metadata catalog.
Example 18. The method of example 17, wherein obtaining the metadata comprises obtaining the metadata from the data objects while stored in the one or more server clusters.
Example 19. The method of example 17, wherein obtaining the metadata comprises obtaining the metadata during a backup performed by the data platform with respect to the data objects.
Example 20. The method of any of examples 17-19, wherein the one or more server clusters comprises a plurality of server clusters that each store a portion of the data objects.
Example 21. The method of any of examples 17-20, wherein logging the metadata comprises correlating the metadata between different ones of the data objects from different ones of the one or more server clusters.
Example 22. The method of any of examples 17-21, wherein the method further comprises: accepting a subscription to the unified metadata catalog by a third-party service included in the one or more services, the subscription defining parameters for delivery of the metadata to the third party service; and outputting the metadata from the unified metadata catalog based on the parameters for the delivery of the metadata to the third-party service.
Example 23. The method of any of examples 17-22, wherein the metadata includes one or more of a modification time by a user, whether a corresponding one of the data objects contains personal identification information, an indication of an owner of the data object, permissions assigned to the owner, permissions assigned to the corresponding one of the data objects, access times by a user, permissions assigned to the user that accessed the corresponding one of the data objects, and a size of the corresponding one of the data objects.
Example 24. The method of any of examples 17-23, wherein obtaining the metadata comprises obtaining the metadata according to an extensible metadata schema.
Example 25. The method of any of examples 17-24, wherein the one or more data objects include multiple copies of the same data object, and wherein the metadata indicates where each copy of the multiple copies of the same data object are stored within the data management platform.
Example 26. The method of any of examples 17-25, wherein the services include one or more of: a security service that processes the metadata stored to the unified metadata catalog to detect security vulnerabilities; a compliance service that processes the metadata stored to the unified metadata catalog to detect compliance of data objects with various regulations; a troubleshooting service that processes the metadata stored to the unified metadata catalog to detect misconfiguration of the one or more server clusters; and a planning service that processes the metadata stored to the unified metadata catalog to determine resource planning for one or more of reconfiguring, expanding, and contracting the one or more server clusters.
Example 27. The method of any of examples 17-26, wherein the one or more services include a universal data access layer that provides a defined interface accessible by components of the data platform by which the components access the metadata stored to the unified metadata catalog.
Example 28. The method of any of examples 17-27, wherein obtaining the metadata from the data objects comprising incrementally obtaining the metadata only from the data objects that have changed since a previous time the metadata for the data objects that have changed was obtained.
Example 29. The method of any of examples 17-28, wherein exposing the unified metadata catalog comprises exposing the unified metadata catalog via an application programming interface.
Example 30. The method of any of examples 17-29, wherein obtaining the metadata comprises processing the data objects to identify one or more portions of the data objects that satisfy a similarity threshold and obtain a similarity score, and wherein logging the metadata comprises logging the similarity score as additional metadata to the unified metadata catalog.
Example 31. The method of example 30, wherein obtaining the metadata comprises performing a byte-level comparison of the data objects to determine whether the data objects satisfy the similarity threshold.
Example 32. The method of example 30, wherein obtaining the metadata comprises performing a semantic comparison of the data objects to determine whether the data objects satisfy the similarity threshold.
Example 33. Non-transitory computer-readable media comprising instructions that, when executed by processing circuitry of a data platform having access to one or more server clusters storing data objects, cause the processing circuitry to: obtain metadata from the data objects; log the metadata to the unified metadata catalog, the unified metadata catalog logging the metadata as the metadata changes over time; and expose the unified metadata catalog to one or more services that perform operations with respect to the unified metadata catalog.
Example 34. The non-transitory computer-readable medium of example 29, further comprising instructions that, when executed by the processing circuitry, cause the processing circuitry to perform functionalities corresponding to steps recited in any of examples 15-28.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

## Claims

1. A computing system having access to one or more server clusters storing data objects, the system comprising:
a memory configured to store a unified metadata catalog; and
processing means configured to:
obtain metadata from the data objects;
log the metadata to the unified metadata catalog, the unified metadata catalog logging the metadata as the metadata changes over time so that the unified metadata catalog maintains a time-based historical record of the metadata; and
expose the unified metadata catalog to one or more services that perform operations with respect to the unified metadata catalog.

2. The computing system of claim 1, wherein the processing means is configured to obtain the metadata from:
the data objects while stored in the one or more server clusters; or
during a backup performed with respect to the data objects.

3. The computing system of claim 1 or claim 2, wherein the one or more server clusters comprises a plurality of server clusters that each store a portion of the data objects.

4. The computing system of any preceding claim, wherein the processing means is configured to correlate the metadata between different ones of the data objects from different ones of the one or more server clusters.

5. The computing system of any preceding claim, wherein the processing means is further configured to:
accept a subscription to the unified metadata catalog by a third-party service included in the one or more services, the subscription defining parameters for delivery of the metadata to the third-party service; and
output the metadata from the unified metadata catalog based on the parameters for the delivery of the metadata to the third-party service.

6. The computing system of any preceding claim, wherein the metadata includes one or more of a modification time by a user, whether a corresponding one of the data objects contains personal identification information, an indication of an owner of the data object, permissions assigned to the owner, permissions assigned to the corresponding one of the data objects, access times by a user, permissions assigned to the user that accessed the corresponding one of the data objects, and a size of the corresponding one of the data objects.

7. The computing system of any preceding claim, wherein the processing means is configured to obtain the metadata according to an extensible metadata schema.

8. The computing system of any preceding claim,
wherein the one or more data objects include multiple copies of the same data object, and
wherein the metadata indicates where each copy of the multiple copies of the same data object are stored.

9. The computing system of any preceding claim, wherein the services include one or more of:
a security service that processes the metadata stored to the unified metadata catalog to detect security vulnerabilities;
a compliance service that processes the metadata stored to the unified metadata catalog to detect compliance of data objects with various regulations;
a troubleshooting service that processes the metadata stored to the unified metadata catalog to detect misconfiguration of the one or more server clusters;
a planning service that processes the metadata stored to the unified metadata catalog to determine resource planning for one or more of reconfiguring, expanding, and contracting the one or more server clusters; and
a universal data access layer that provides a defined interface accessible by components of a data platform by which the components access the metadata stored to the unified metadata catalog.

10. The computing system of any preceding claim, wherein the processing means is configured to obtain the metadata from the data objects by incrementally obtaining the metadata only from the data objects that have changed since a previous time the metadata for the data objects that have changed was obtained.

11. The computing system of any preceding claim, wherein the processing means is configured to expose the unified metadata catalog via an application programming interface.

12. The computing system of any preceding claim, wherein the processing means is configured to:
process the data objects to identify one or more portions of the data objects that satisfy a similarity threshold and obtain a similarity score; and
log the similarity score as additional metadata to the unified metadata catalog,
wherein optionally processing the data objects comprises performing a byte-level comparison of the data objects or performing a semantic comparison of the data objects to determine whether the data objects satisfy the similarity threshold.

13. The computing system of any preceding claim, wherein the processing means is configured to provide different access modes based on permissions assigned to different users that restrict access to the metadata, wherein the different users are associated with the one or more services.

14. A method comprising:
obtaining metadata from data objects stored by one or more server clusters;
logging the metadata to a unified metadata catalog, the unified metadata catalog logging the metadata as the metadata changes over time so that the unified metadata catalog maintains a time-based historical record of the metadata; and
exposing the unified metadata catalog to one or more services that perform operations with respect to the unified metadata catalog.

15. One or more computer-readable media comprising instructions that, when executed by processing means of a data platform having access to one or more server clusters storing data objects, cause the processing means to:
obtain metadata from the data objects;
log the metadata to a unified metadata catalog, the unified metadata catalog logging the metadata as the metadata changes over time so that the unified metadata catalog maintains a time-based historical record of the metadata; and
expose the unified metadata catalog to one or more services that perform operations with respect to the unified metadata catalog.
